Europäisches Patentamt

European Patent Office

Office européen des brevets

(11) Publication number: **0 038 662**
**B1**

(12) **EUROPEAN PATENT SPECIFICATION**

(45) Date of publication of patent specification: **16.01.85**

(21) Application number: **81301625.0**

(22) Date of filing: **14.04.81**

(51) Int. Cl.⁴: **B 23 H 1/02**

(54) **A power source arrangement for an electric discharge machine.**

(30) Priority: **16.04.80 JP 49942/80**

(43) Date of publication of application:
**28.10.81 Bulletin 81/43**

(45) Publication of the grant of the patent:
**16.01.85 Bulletin 85/03**

(84) Designated Contracting States:
**DE FR GB**

(56) References cited:
**FR-A-2 212 210**
**US-A-3 875 362**
**US-A-4 071 729**

(73) Proprietor: **FANUC LTD**
**5-1, Asahigaoka 3-chome Hino-shi**
**Tokyo 191 (JP)**

(72) Inventor: **Obara, Haruki**
**No. 844-7, Hashimoto**
**Sagamihara-shi Kanagawa, 229 (JP)**

(74) Representative: **Billington, Lawrence Emlyn et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to a power source arrangement for electric discharge machining achieved by applying a voltage between an electrode and a work.

In electric discharge machining that machines a work by applying a pulse voltage to a spark gap defined between an electrode and the work, it is very likely that, during the machining, an arc forms in the spark gap or that cutting chips accumulate in the gap to cause a short between the electrode and the work. The generation of such an arc or short decreases the cutting efficiency in proportion to the duration of its existence and is liable to deteriorate the surface finish of the work. Especially, arcing or shorting of long duration markedly impairs the cutting efficiency and incurs burning of the work and, in the case of wire-cut, electric discharge machining, breakage of the wire. Accordingly, it is necessary to remove such arcing or shorting as soon as possible if it occurs during cutting.

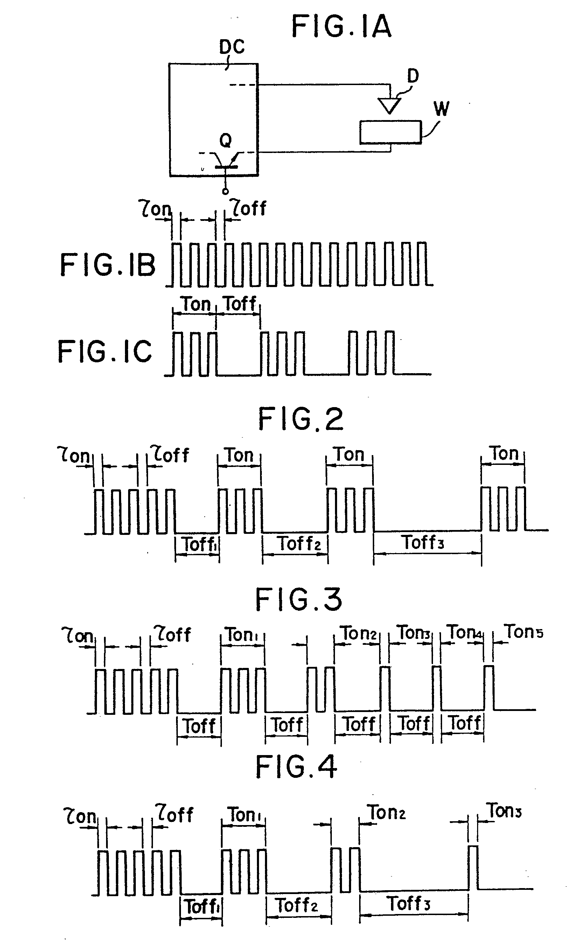

To this end, the prior art employs such a method that the OFF period of a power source DC for applying a voltage across an electrode D and a work W, as shown in Fig. 1A, is extended for a certain period of time in the case of arcing or shorting. That is, during normal operation a switching element Q for turning ON and OFF the power source DC is driven by a pulse signal of a predetermined period which has an ON time $\tau_{on}$ and an OFF time $\tau_{off}$, such as shown in Fig. 1B, but in the case of arcing or shorting having once occurred, the switching element Q is driven by such a pulse signal as depicted in Fig. 1C which has long interval OFF and interval ON periods Toff and Ton, thereby to perform control for an early restoration of insulation of the spark gap.

With the above conventional method, however, the interval ON and OFF periods Ton and Toff are fixed and set to mean values obtained experimentally; therefore, an arc of high intensity cannot be removed in one interval OFF period Toff. If the arcing is not removed in one interval OFF period, then an arc discharge is produced in the immediately subsequent interval ON period Ton in many cases, by which the insulation of the spark gap is degraded, making it difficult to restore complete insulation of the gap in the subsequent interval OFF period Toff. For such reasons, the prior art has encountered with difficulty in early removal of an arc of high intensity and suffered from burning of the work and reduction of the cutting efficiency by arcing of long duration.

It is an object of the present invention to provide a power source arrangement for electric discharge machining which is designed so that the interval ON and OFF periods are varied with the duration of an arc or short in the spark gap to permit an early removal of an arc or short regardless of its intensity, thereby providing for enhanced overall cutting efficiency.

In the prior art, US—A—4 071 729 discloses a system for controlling an electric discharge machine, in which machining power pulses are applied to the working gap with a predetermined on-off time. The pulse off time can be controlled in dependence upon gap voltage.

US—A—3 875 362 discloses a similar system in which pulse trains are applied to the working gap, two consecutive pulse trains being separated by a cut-off duration which is long enough to ensure that at least the first discharge pulse in each pulse train is a normal pulse for a normal discharge, and not an abnormal pulse such as results from arcing or short circuit conditions between the electrode and the work.

According to the present invention there is provided a power source arrangement for an electric discharge machine, in which arrangement a power source and a switching element are to be connected between an electrode and a work and the switching element is driven by a pulse signal of a predetermined period to perform electric discharge machining of the work when the arrangement is in use, the power source arrangement further comprising:

a pulse signal generator for generating a further pulse signal such that the ratio of its OFF control period to its ON control period gradually increases with the lapse of time; and

a detector for detecting the occurrence of an arc or short in a spark gap defined by the electrode and the work when the arrangement is in use;

the detector being arranged to influence the pulse signal generator in such manner that when an arc or short in the spark gap is detected when the arrangement is in use, the pulse signal generator is activated to gate by its output pulse signal, until the arc or short is removed, the first-mentioned pulse signal driving said switching element.

The inventive addition, to a power source arrangement such as disclosed in US—A—3 875 362, of the pulse signal generator and the detector in combination enables the invention to apply to the arc or short in the spark gap a corrective effect which increases with time as long as the arc or short persists. This type of corrective effect is not present in the prior art.

For a better understanding of the invention and to show how it may be put into effect reference will now be made, by way of example, to the accompanying drawings in which:

Fig. 1 is explanatory of a conventional method for the removal of an arc or short in the spark gap;

Figs. 2 to 4 are explanatory of embodiments of the present invention;

Fig. 5 is an electric circuit diagram illustrating an example of a power source arrangement for electric discharge machining according to the present invention;

Figs. 6 and 7 are explanatory of the operation of the circuit depicted in Fig. 5;

Fig. 8 is a block diagram illustrating an example of a control circuit used in Fig. 5; and

Fig. 9 shows signal waveforms appearing at respective parts of the circuit of Fig. 8 during the operation thereof.

Fig. 2 is explanatory of an embodiment of the present invention, showing a pulse signal which is applied to a switching element of a power source for electric discharge machining. In this embodiment, the signal such as shown in Fig. 2 in which the interval ON period Ton is constant but the interval OFF period Toff increases with the lapse of time is applied to the switching element of the power source until arcing or shorting ceases. With such an arrangement, an arc of high intensity which is not removed in a first interval OFF period $Toff_1$ can be removed in a longer second or third interval OFF period $Toff_2$ or $Toff_3$, preventing arcing or shorting from lasting for a long time.

In this case, it may be considered that a gradual increase in the interval OFF period Toff will cause a decrease in an average cutting speed as compared with that in the prior art, but by increasing the interval OFF period in accordance with the intensity of the arc, the peak value $I_p$ of the working current can be increased by that; therefore, the cutting speed does not become lower than in the prior art. Conversely the cutting efficiency is improved by an earlier removal of the arc of high intensity.

The length of the first interval OFF period $Toff_1$ may be set to a value substantially equal to the interval OFF period Toff in the prior art example of Fig. 1, but it is preferred to set the interval OFF period $Toff_1$ to a value smaller than that Toff, taking into account the facts that many arcs which form during cutting disappear in a very short interval OFF period and that the interval OFF period $Toff_1$ is followed by longer ones, unlike in the prior art.

Fig. 3 schematically shows a pulse signal for driving the power source for electric discharge machining in accordance with another embodiment of the present invention. In this embodiment, upon occurrence of arcing or shorting, such a pulse signal as depicted in Fig. 3 in which the interval OFF period Toff is fixed and the interval ON period Ton decreases with the lapse of time is applied to the switching element of the power source until the arc or short disappears. With such an arrangement, in the case where the insulation of the spark gap is not sufficiently restored in the first interval OFF period Toff, the insulation of the gap in the subsequent interval ON period Ton is less degraded than in the prior art; namely, there can equivalently be produced the same effect as that obtainable by extending the interval OFF period Toff, in consequence of which an early removal of an arc of high intensity can be achieved. In this case, the cutting speed becomes higher than in the prior art partly because the reduction of the interval ON period Ton decreases the wasteful arc discharge during the generation of the arc of high intensity, and partly because the arc is removed early.

The reason for which the first interval ON period is not reduced is to apply a current across the electrode and the work to some extent whereby cutting chips are blown off which might have accumulated in the spark gap to cause arcing or shorting between the electrode and the work. In the case where arcing or shorting has not been removed after several, relatively long intervals ON periods, it is better, or course, to reduce the interval ON period and await restoration of insulation by spontaneous vibrations of the electrode or pressure fluctuations of the dielectric fluid. The reason is that if the application of the working current should be continued, the arcing or shorting portions would be overheated to generate ions in quantities or bubbles, exerting bad influence on the subsequent machining. Based on such an idea, the interval ON period is reduced with time in this embodiment. The interval ON period can be reduced to a minimum one necessary for the detection of an arc or short.

Fig. 4 illustrates a pulse signal for driving the power source for electric discharge machining in accordance with another embodiment of the present invention, which is a combination of the two embodiments described above. That is, upon occurrence of an arc or short, the pulse signal such as depicted in Fig. 4 in which the interval OFF period Toff increases with the lapse of time and the interval ON period Ton decreases with the lapse of time is applied to the switching element of the power source until the arc or short is removed. Such an arrangement permits an earlier removal of an arc of higher intensity than the above-described embodiments and consequently, the cutting efficiency is also raised by that.

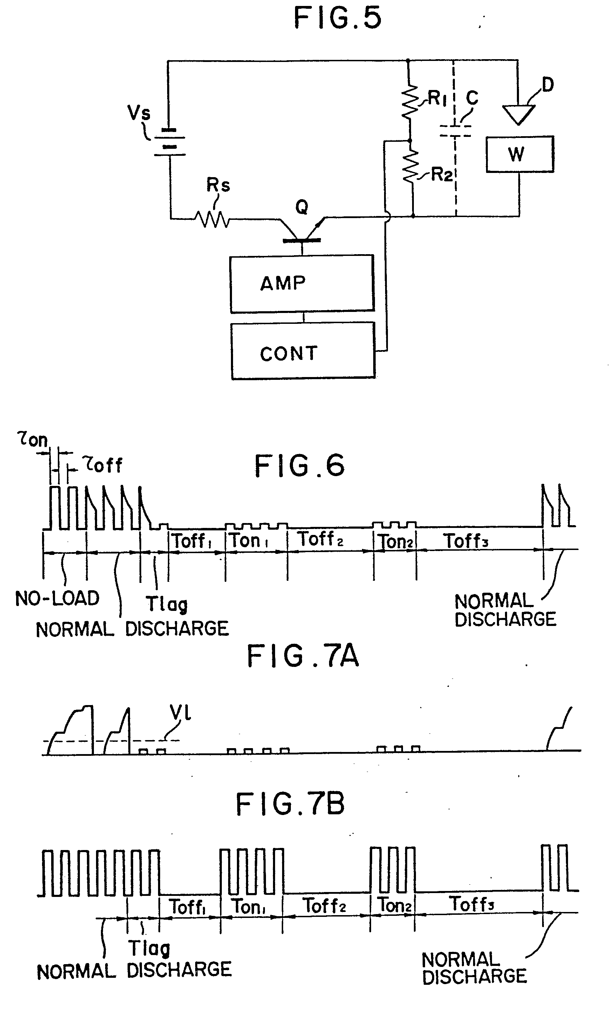

Fig. 5 is an electric circuit diagram showing an example of a power source arrangement for electric discharge machining according to the present invention. In Fig. 5, reference character D indicates an electrode; W designates a work $V_s$ identifies a DC high-tension power source; $R_s$ denotes a charging resistor; Q represents a switching element such as, for example, a transistor $R_1$ and $R_2$ show voltage dividing resistors; C refers to a capacitor; CONT indicates a control circuit; and AMP designates a preamplifier. In the absence of the capacitor C, there is formed what is called an independent discharge circuit, and, by connecting the capacitor C as depicted, a slave discharge circuit is formed.

The control circuit CONT generates a pulse signal of a predetermined period which has an ON time $\tau_{on}$ and an OFF time $\tau_{off}$ and, at the same time, the spark gap voltage is detected by

the resistors $R_1$ and $R_2$ and when the occurrence of arcing or shorting is detected, the control circuit CONT adds to the abovesaid pulse signal such interval ON and interval OFF periods as are shown in Figs. 2 to 4 and applies them via the pre-amplifier AMP to the base of the transistor Q.

Fig. 6 shows variations in the spark gap voltage $V_G$ with time in the case of operating the circuit of Fig. 5 as an independent discharge circuit. As shown in Fig. 6, during normal discharge, a discharge or a no-load state is repeated with the ON time $\tau_{on}$ and the OFF time $\tau_{off}$. When an arc or short has formed in the spark gap, the first interval period Toff$_1$ is inserted after a certain period of time Tlag. And the switching operation is performed again for the interval ON period Ton$_1$ alone and it is checked by the control circuit CONT whether the arc or short has been removed or not in this period. In the illustrated example, since the spark gap does not restore insulation in this period, the second interval OFF period Toff$_2$ is inserted and, in the interval ON period Ton$_2$, it is checked whether the arc or short has been removed or not. Such operations are repeated until the spark gap restores insulation. Fig. 6 shows the case where the normal discharge is restored after the third interval OFF period Toff$_3$.

In the case of operating the circuit of Fig. 5, as a slave discharge circuit, the spark gap voltage $V_G$ undergoes, with the lapse of time, such variations as depicted in Fig. 7A. The operation of the switching element Q in this case is such as shown in Fig. 7B. The occurrence of arcing or shorting in the spark gap is checked by comparing a reference voltage VI and the spark gap voltage $V_G$ in the period Tlag. The reason for which the interval OFF period Toff is inserted a certain period of time Tlag after the detection of the occurrence of arcing or shorting instead of immediately thereafter, is to prevent the cutting efficiency from being impared by inserting the interval OFF period in response to an arc discharge which occurs instantly. This time lag Tlag is required especially for finish machining or wire-cut, electric discharge machining through the use of the slave discharge circuit.

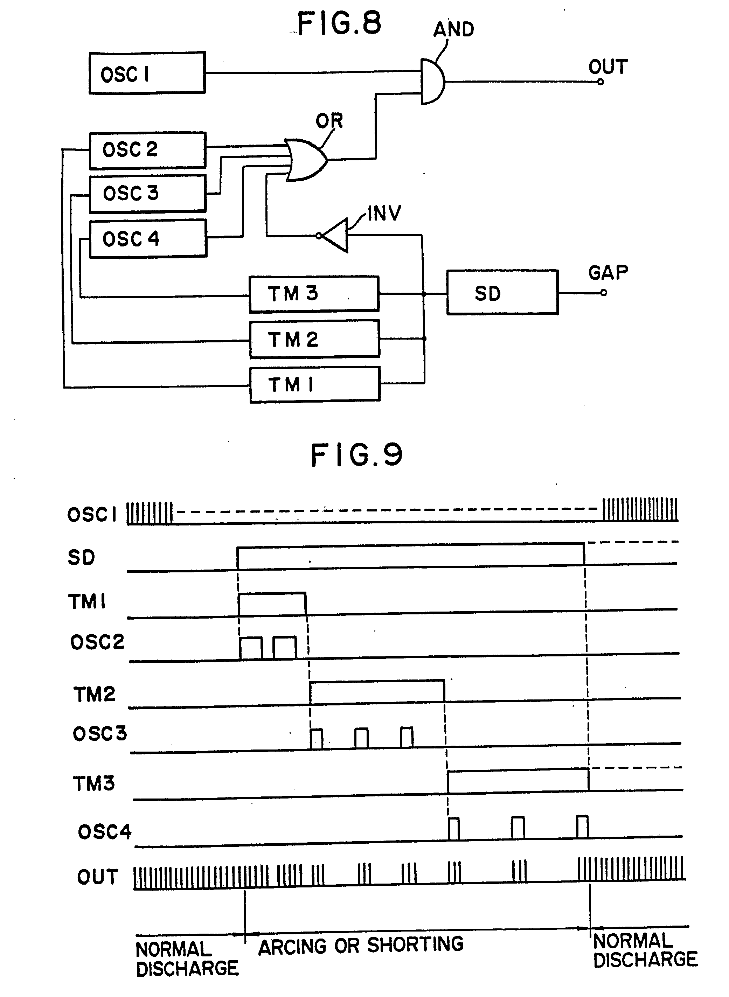

Fig. 8 is a block diagram illustrating an example of the control circuit CONT, which is designed for changing both of the interval ON and the interval OFF period. In Fig. 8, reference characters OSC1 to OSC4 indicate oscillators; SD designates a short detector circuit; TM1 to TM3 identify timers; INV denotes an inverter; OR represents an OR circuit; AND shows an AND circuit; OUT refers to an output terminal; and GAP indicates an input terminal. Fig. 9 shows signal waveforms occurring in respective parts of the circuit of Fig. 8 during the operation thereof.

In Fig. 8, a spark gap voltage signal is applied via the input terminal GAP to the short detector circuit SD, which detects an arc or short in the spark gap and yields "1" in the case of arcing or shorting and "0" in the case of normal discharge. The short detector circuit SD is formed using a desired one of known circuit arrangements.

The oscillator OSC1 is to supply the AND circuit AND with the pulse signal of a predetermined period which has the ON time $\tau_{on}$ and the OFF time $\tau_{off}$. During normal operation, since the AND circuit AND is opened by the output from the inverter INV, the output pulse signal from the oscillator OSC1 is applied in the output terminal OUT to the pre-amplifier AMP shown in Fig. 5. The period of the oscillator OSC1 is usually variable from the outside.

Each of the timers TM1 to TM3 is one that when supplied with the output signal "1" from the short detector circuit SD, generates pulses for a certain period of time after a certain time lag. These timers apply such pulses as shown to the oscillators OSC1 to OSC4 in a sequential order TM1—TM2—TM3. The outputs from the timers TM1 to TM3 become all "0" when the output from the short detector circuit SD has become "0". The timer TM3 maintains its output at "1" until the short detector circuit SD provides the output "0". The times of such operations are formed using analog or digital IC's now on the market.

The oscillators OSC2 to OSC4 are each such an oscillator that starts oscillation upon application of an input signal "1" and retains the oscillation while the input signal is "1". These oscillators are set so that the ON time of the output pulses decreases in the order OSC2—OSC3—OSC4 and that the OFF time increases in the opposite order. The ON time and OFF time determine the interval ON period and the interval OFF period. By the outputs from the oscillators OSC2 to OSC4, the output pulses from the oscillator OSC1 are gated in the AND circuit. As a result of this, the output signal at the output terminal OUT undergoes such changes as depicted in Fig. 9 during the generation of an arc or short. Upon removal of the arc or short, the output from the short detector circuit SD becomes "0" and the AND circuit AND is opened by the output from the inverter INV, permitting the output from the oscillator OSC1 to be derived as it is at the output terminal OUT.

The above embodiment varies both of the interval ON and the interval OFF period but a modification for changing the interval ON or OFF period only can also be achieved by substantially the same arrangement as described above. Moreover, an oscillator of the type that changes the ON time and the OFF time of its output in accordance with an input voltage is commercially available as an IC; accordingly, the oscillators OSC2 to OSC4 can be substituted with such an oscillator by applying thereto the output from the short detector circuit SD in Fig. 8 after integrating it. It is also possible to control the interval ON and OFF periods by providing, instead of the oscillators OSC2 to OSC4, an ON time counter and an OFF time counter for counting external clock pulses and changing their count values by a data select circuit in accordance with the output signals from the timers TM1 to TM3.

As has been described in the foregoing upon detection of the occurrence of an arc or short, the interval ON and OFF periods are added to the drive pulse signal of a predetermined period which is applied to the switching element for timing element for turning ON and OFF the power source for electric discharge machining and the ratio of the interval OFF period to the interval ON period is gradually increased with the lapse of time, by which an arc of high intensity can also be removed at an early stage, providing for enhanced cutting efficiency. Accordingly, the present invention is of great utility when employed in an ordinary electric discharge machine or wirecut, electric discharge machine.

It will be apparent that many modifications and variations may be effected without departing from the scope of this invention as defined by the attached claims.

## Claims

1. A power source arrangement for an electric discharge machine, in which arrangement a power source (V$_s$) and a switching element (Q) are to be connected between an electrode (D) and a work (W) and the switching element (Q) is driven by a pulse signal of a predetermined period to perform electric discharge machining of the work (W) when the arrangement is in use, the power source arrangement further comprising:

a pulse signal generator (CONT) for generating a further pulse signal such that the ratio of its OFF control period (Toff) to its ON control period (Ton) gradually increases with the lapse of time; and

a detector (R$_1$, R$_2$) for detecting the occurrence of an arc or short in a spark gap defined by the electrode (D) and the work (W) when the arrangement is in use;

the detector (R$_1$, R$_2$) being arranged to influence the pulse signal generator (CONT) in such manner that when an arc or short in the spark gap is detected when the arrangement is in use, the pulse signal generator (CONT) is activated to gate by its output pulse signal, until the arc or short is removed, the first-mentioned pulse signal driving said switching element (Q).

2. An arrangement according to claim 1, wherein the pulse signal generator (CONT) is operable to gradually increase its OFF control period with the lapse of time.

3. An arrangement according to claim 1 or 2, wherein the pulse signal generator (CONT) is operable to gradually decrease its ON control period with the lapse of time.

4. A power source arrangement according to any one of the preceding claims, when in operable combination with an electric discharge machine.

5. A power source arrangement according to any one of the preceding claims, the electric discharge machine being a wire-cut electric discharge machine.

## Patentansprüche

1. Energiequellenanordnung für eine Funkenerosionsmaschine in welcher Anordnung eine Energiequelle (V$_s$) und ein Schaltelement (Q) zwischen eine Elektrode (D) und ein Werkstück (W) zu schalten sind und das Schaltelement (Q) durch ein Impulssignal einer vorbestimmten Periode getrieben wird um eine Funkenerosionsbearbeitung des Werkstückes (W) durchzuführen, wenn die Anordnung benutzt wird, wobei die Energiequellenanordnung desweiteren folgende Element enthält:

einen Impulssignalgenerator (CONT) zum Erzeugen eines weiteren Impulssignals derart, daß sich das Verhältnis von dessen AUS-Steuerperiode (T$_{off}$) zu dessen EIN-Steuerperiode (T$_{on}$) graduell mit dem Zeitablauf erhöht, und.

einen Detektor (R$_1$, R$_2$) zum Erfassen des Auftretens eines Lichtbogens oder Kurzschlusses in einer Funkenstrecke, die durch die Elektrode (D) und das Werkstück (W) definiert ist, wenn die Anordnung benutzt wird,

wobei der Detektor (R$_1$, R$_2$) angeordnet ist, um den Impulssignalgenerator (CONT) in einer Weise zu beeinflussen, daß dann, wenn ein Lichtbogen oder ein Kurzschluß in der Funkenstrecke erfaßt wird, wenn die Anordnung benutzt wird, der Impulssignalgenerator (CONT) wirksam gemacht wird, um durch sein Ausgangsimpulssignal das erste Impulssignal, welches das Schaltelement (Q) treibt, zu steuern, bis der Lichtbogen oder der Kurzschluß beseitigt ist.

2. Anordnung nach Anspruch 1, dadurch gekennzeichnet, daß der Impulssignalgenerator (CONT) so betreibbar ist, daß er seine AUS-Steuerperiode graduell mit dem Ablaufen der Zeit erhöht.

3. Anordnung nach Anspruch 1 oder 2, dadurch gekennzeichnet, daß der Impulssignalgenerator (CONT) so betreibbar ist, daß er seine EIN-Steuerperiode mit dem Ablaufen der Zeit zu erhöht.

4. Energiequellenanordnung nach einem der vorhergehenden Ansprüche, die in wirksamer Kombination mit einer Funkenerosionsmaschine vorgesehen ist.

5. Energiequellenanordnung nach einem der vorhergehenden Ansprüche, wobei die Funkenerosionsmaschine eine Schneiddraht-Funkenerosionsmaschine ist.

## Revendications

1. Un système d'alimentation pour une machine d'électroérosion, dans lequel une source d'énergie ($V_s$) et un élément de commutation (Q) doivent être connectés entre une électrode (D) et une pièce à usiner (W), et l'élément de commutation (Q) est attaqué par un signal sous forme d'impulsions ayant une période prédéterminée, pour effectuer un usinage par électroérosion de la pièce (W), lorsque le système est en cours d'utilisation, le système d'alimentation comprenant en outre:

un générateur de signal sous forme d'impulsions (CONT) destiné à générer un signal sous forme d'impulsions supplémentaire tel que le rapport entre sa durée de commande d'état ARRET (Ta) et sa durée de commande d'état MARCHE (Tm) augmente progressivement lorsque le temps passe; et un détecteur ($R_1$, $R_2$) destiné à détecter l'apparition d'un arc ou d'un court-circuit dans un intervalle d'amorçage d'étincelle qui est défini par l'électrode (D) et la pièce (W), lorsque le système est en cours d'utilisation; le detecteur ($R_1$, $R_2$) étant conçu de façon à agir sur le générateur de signal sous forme d'impulsions (CONT) d'une manière telle que lorsqu'un arc ou un court-circuit dans l'intervalle d'amorçage d'étincelle est détecté, pendant que le système est en cours d'utilisation, le générateur de signal sous forme d'impulsions (CONT) soit activé pour commander, par son signal de sortie sous forme d'impulsions, la transmission sélective du signal sous forme d'impulsions mentionné en premier qui attaque l'élément de commutation (Q), jusqu'à ce que l'arc ou le court-circuit soit supprimé.

2. Un système selon la revendication 1, dans lequel on peut faire fonctionner la générateur de signal sous forme d'impulsions (CONT) de façon à augmenter progressivement sa durée de commande d'état ARRET au fur et à mesure que le temps passe.

3. Un système selon la revendication 1 ou 2, dans lequel on peut faire fonctionner le générateur de signal sous forme d'impulsions (CONT) de façon à diminuer progressivement sa durée de commande d'état MARCHE au fur et à mesure que le temps passe.

4. Un système d'alimentation selon l'une quelconque des revendications précédentes, considéré en combinaison fonctionnelle avec une machine d'électroérosion.

5. Un système d'alimentation selon l'une quelconque des revendications précédentes, dans lequel la machine d'électroérosion est une machine d'électroérosion par fil.

## FIG. IA

## FIG. IB

## FIG. IC

## FIG. 2

## FIG. 3

## FIG. 4

0 038 662

# FIG.5

# FIG.6

# FIG.7A

# FIG.7B

2

0 038 662

FIG.8

FIG.9

NORMAL DISCHARGE    ARCING OR SHORTING    NORMAL DISCHARGE

3